(19) Europäisches Patentamt
European Patent Office
Office européen des brevets

(11) **EP 1 612 565 B1**

(12) **EUROPEAN PATENT SPECIFICATION**

(45) Date of publication and mention
of the grant of the patent:
**19.01.2011   Bulletin 2011/03**

(51) Int Cl.:
*G01P 15/00* *(2006.01)*       *G01P 15/18* *(2006.01)*
*G11B 19/04* *(2006.01)*

(21) Application number: **05105662.0**

(22) Date of filing: **24.06.2005**

(54) **Free-fall detection device and free-fall protection system for a portable electronic apparatus**

Freifall-Erkennungsvorrichtung und Freifall-Schutzsystem für ein tragbares elektronisches Gerät

Dispositif de détection de chute libre et système de protection de chute libre pour un appareil électronique portable

(84) Designated Contracting States:
**DE FR GB IT**

(30) Priority: **28.06.2004   IT TO20040436**
**26.07.2004   US 590997**

(43) Date of publication of application:
**04.01.2006   Bulletin 2006/01**

(73) Proprietors:
• **STMicroelectronics Srl**
**20041 Agrate Brianza (MB) (IT)**
• **STMicroelectronics, Inc.**
**Carrollton**
**Texas 75006 (US)**

(72) Inventors:
• **Pasolini, Fabio**
**27028, SAN MARTINO SICCOMARIO (IT)**

• **Tronconi, Michele**
**27028, SAN MARTINO SICCOMARIO (IT)**
• **Lin, Wen**
**80503, LONGMONT (US)**
• **Raasch, William**
**80503, LONGMONT (US)**

(74) Representative: **Jorio, Paolo et al**
**STUDIO TORTA**
**Via Viotti 9**
**10121 Torino (IT)**

(56) References cited:
**EP-A- 0 444 449       EP-A- 0 658 894**
**WO-A-2006/060077     JP-A- 2000 249 717**
**US-A- 4 745 564**

## Description

The present invention relates to a free-fall detection device and to a free-fall protection system for a portable electronic apparatus, in particular for the protection of a mass-storage device (HDD - Hard Disk Drive) in the portable electronic apparatus, to which the following description will make explicit reference without this implying any loss of generality.

As it is known, in portable mobile applications HDD devices are more and more frequently incorporated into personal electronic and personal computer products. This is because HDD high capacity, fast speed, and low price combination surpasses any other memory product, making them the best choice for data storage in portable apparatuses, such as laptop computers, Personal Data Assistants (PDAs), digital audio players, mobile phones, digital cameras, and the like.

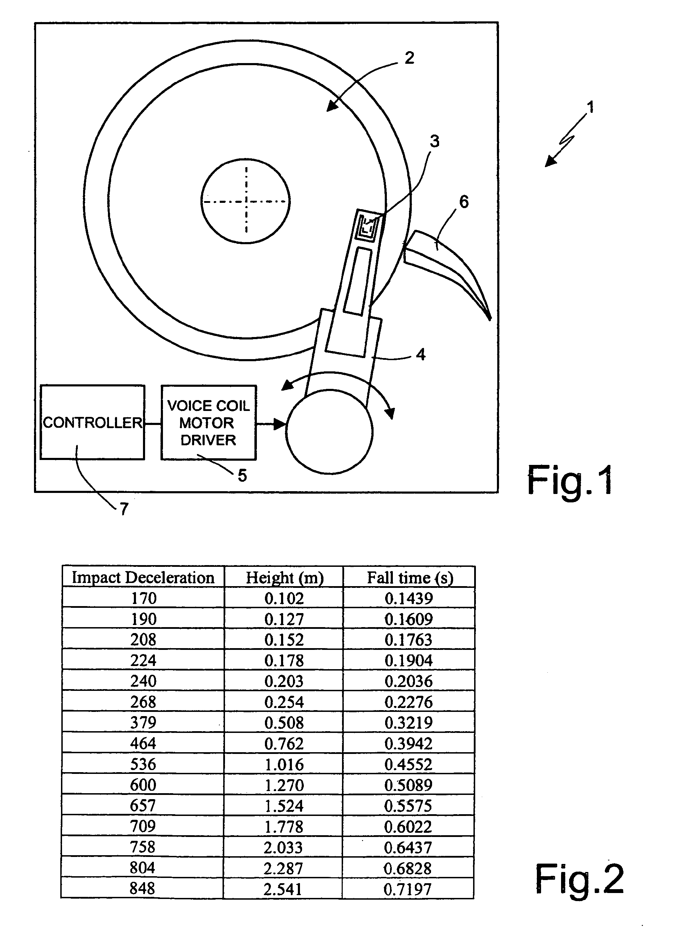

Figure 1 shows schematically the structure of a typical HDD device 1. In a per se known manner, the HDD device 1 comprises: a rotating disk 2, provided with a magnetic thin film as a data-storage medium and being rotated around an axis by a spindle motor (not shown); a read/write head 3 which is carried by an arm 4 and is suspended over the rotating disk 2, and which comprises a magnetic transducer that magnetically transfers information to and from the data-storage medium; a voice coil motor driver 5 for moving and positioning the arm 4 over the rotating disk 2; a parking ramp 6; and a microprocessor controller 7 for controlling operation of the HDD device 1, and particularly of the voice coil motor driver 5 and the spindle motor. When in operation, the read/write head 3 is positioned over specific locations of the rotating disk 2 for reading data from and writing data to the associated data-storage medium. Under certain circumstances, such as when the HDD device 1 is in power down or in low power consumption mode, the read/write head 3 is moved away from the surface of the rotating disk 2 and parked in a detent position at the parking ramp 6.

Due to their portable nature, the above electronic portable apparatuses are accident prone and may easily undergo violent impacts, in particular in the case where they are dropped onto the floor during normal use. In the case of a fall, the impact of the portable apparatus with the ground has repercussions on the associated HDD device 1, in the worst case producing damage and consequent permanent loss of data. In fact, the HDD device 1 is very sensitive to impact, in so far as, in order to ensure its proper operation, the read/write head 3 is normally kept at a very small distance from the associated data-storage medium. Consequently, in the case of an impact, the read/write head 3 collides with and may get damaged together with the data-storage medium, causing irreversible loss of the data stored within.

To prevent, or at least limit, the occurrence of the above destructive events, HDD protection systems based upon the detection of a condition of free-fall of the portable apparatuses have been proposed.

As it is known, an object is considered to be in free-fall when it is falling under the only influence of gravity; in other words, any object which is moving and being acted upon the sole force of gravity is said to be in a state of free-fall. The following is the module of the free-fall equation of an object which is in free-fall condition, assuming a zero velocity at the beginning of the fall:

$$ h = \frac{1}{2} \cdot g \cdot t^2 $$

where h is the initial height of the fall, g is the acceleration of gravity (9,81 m/s$^2$), and t is the fall time. By way of example, and using the above equation, a fall time of about 378 ms can be calculated from a typical desktop height of about 0,7 m. An impact deceleration force can also be calculated using the following equation:

$$ A = \frac{\pi \cdot R \cdot \sqrt{2 \cdot g \cdot h}}{2 \cdot t} $$

The table of Figure 2 shows the impact deceleration force A (normalized to the g value), and fall time t based on the height h of the fall, assuming a rebound factor of 1,5 (where 1 means no rebound, and 2 means 100% rebound) and a shock duration of 2 ms.

In particular, following upon a free-fall detection, the above HDD protection systems issue appropriate actions for protecting the electronic portable apparatus, e.g. they command for retracting the read/write head 3 from the disk surface up to the positioning ramp 6. As a result, upon impacting the ground of the HDD device 1, the read/write head 3 and the rotating disk 2 do not collide, thus preventing the HDD device 1 from damage, or in any case limiting the extent of such damage.

For example, considering that a typical HDD device of a portable PC system can sustain 800 g non operating shocks and 225 g operating shocks, from the above table it follows that the HDD device can sustain impact if it falls from height below 0,178 m. The HDD device can not sustain impact if it falls from height above 2,282 m, because the impact deceleration force A is over the non operating shock level. With the above protection systems, the HDD device may sustain fall impact between 0,178 m to 2,282 m by placing the read/write head 3 to the ramp position, therefore greatly reducing the possibility of damage and loss of data.

In greater detail, the free-fall condition of the portable electronic apparatus is detected by using an acceleration sensor, fixed to the portable electronic apparatus. In particular, a free-fall condition is detected when the magnitude of the acceleration vector calculated from the acceleration sensor output falls within a preset range of values. In general, since it is not possible to determine the orientation of the portable apparatus during its free-fall, a three-axis acceleration sensor is used, the acceleration vector being the vector sum of the acceleration components along three mutually orthogonal axes.

To obtain an efficient protection against impact, the free-fall condition must be detected in the shortest time possible so as to enable subsequent activation of the appropriate actions of protection. In known HDD protection systems, a microprocessor is used to poll and to acquire the acceleration sensor outputs, to calculate the acceleration vector and its magnitude, and to compare the calculated magnitude against to a preprogrammed threshold value. In particular, the main microprocessor of the portable electronic apparatus that it is desired to protect or the controller of the HDD device, or even a dedicated microprocessor are used for this purpose.

A solution of this sort does not always enable detection of the condition of free-fall with a promptness sufficient to prevent damage to the portable electronic apparatuses. In fact, if the main microprocessor of the portable electronic apparatus, or the microprocessor of the HDD device controller are used, the same microprocessors must perform a plurality of functions, and are used in "time sharing" by the various resources and cannot dedicate the majority of their computing power and time to monitoring the output of the accelerometer. It follows that the free-fall event can occur during a time interval in which the microprocessor is occupied to manage other resources, and the free-fall can thus be detected too late to avoid damage to the portable electronic apparatus. Also, even if a dedicated microprocessor is used (solution that can be anyway too expensive for most applications), if the free-fall event happens in between two consecutive acquisition cycles, there is a latency time before the free-fall event can be reported (the worst latency time being a full sample time interval). In addition to this latency time, microprocessor instructions execution time (e.g. for the calculation of the vector sum and magnitude thereof) also needs to be accounted for the overall free-fall detection time.

EP-A-0 444 449 discloses an acceleration measuring device, in particular for detecting the occurrence of accelerations greater than or equal to 1 g, on the one hand, and of microgravity or weightlessness, on the other hand. The device consists of a body arranged in a freely movable fashion in the interior of a housing, and of a number of electrical switches that are to be actuated by this body. The mass of the body is adapted to the actuating force of the switches in such a way that actuation by the body does not occur until above a minimum acceleration acting on the body. EP-A-0 658 894 discloses a disk drive having a free-fall detection device and a related protection system. The free-fall detection device includes an accelerometer and a processor coupled to the accelerometer; the processor is programmed to compute a net acceleration of the disk drive, compare the net acceleration to a threshold and determine a free-fall detection based on the result of the comparison.

US-A-4 745 564 discloses a device for detecting impact of an electronic apparatus, based on recording of accelerations or other physical quantities experienced by the apparatus. In particular, acceleration signals generated by an accelerometer are sampled by a microprocessor; impact is detected when the microprocessor determines exceeding of a given threshold by the acceleration signals.

JP 2000 249717 discloses a circuit for free-fall detection with a simple configuration. The presence or absence of acceleration components acting along x, y and z axes is detected; a gravity-free state is judged in the case of the absence of all three acceleration components acting along the x, y and z axes.

The aim of the present invention is to provide a free-fall detection device and a free-fall protection system for a portable electronic apparatus which are free from the drawbacks referred to above and in particular operate in a more reliable way, and allow for a prompter detection of a free-fall condition of the portable electronic apparatus.

According to the present invention, there are provided a free-fall detection device and a free-fall protection system, as defined in claim 1 and 14 respectively.

For a better understanding of the present invention, preferred embodiments thereof are now described, purely by way of non-limiting example and with reference to the attached drawings, wherein:

- Figure 1 shows a schematic representation of a Hard Disk Drive device of a known type;
- Figure 2 is a table showing values of free-fall related quantities as a function of the height of the fall;
- Figures 3 is a block diagram of a portable electronic apparatus provided with a free-fall protection system according to the present invention;
- Figure 4-6 are schematic representations of a linear accelerometer of a MEMS type ;
- Figure 7 is a more detailed block diagram of a free-fall detection circuit in the system of Figure 3;
- Figure 8 shows time plots of some quantities associated to the system of Figure 3;
- Figure 9 shows an example of application of the free-fall protection system according to the invention; and
- Figure 10 is a block diagram of a different embodiment of the free-fall detection system according to the present invention.

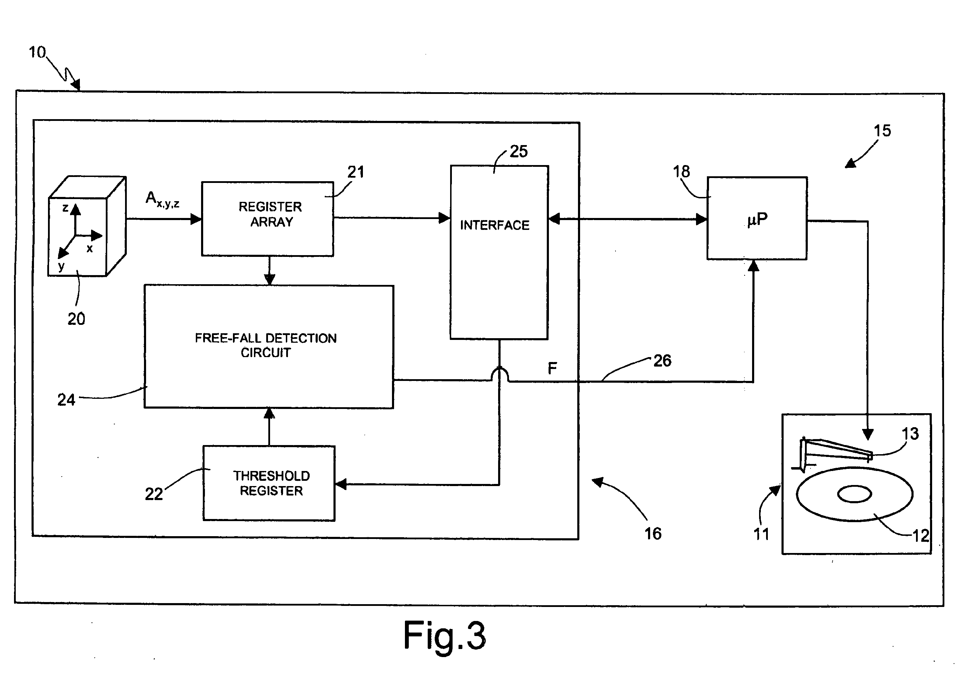

Figure 3 is a schematic illustration of a portable electronic apparatus 10 provided with a Hard Disk Drive device 11 comprising in a known way a data-storage medium 12 and a read/write head 13, and with a free-fall protection system 15, which is connected to the HDD device 11 and is configured to protect the Hard Disk Drive device 11 from a free-fall event.

In detail, the free-fall protection system 15 comprises a free-fall detection device 16 and a processor unit 18, connected to the free-fall detection device 16, and to the Hard Disk Drive device 11. The processor unit 18 can be a microprocessor, a digital signal processor (DSP), a microcontroller, a ASIC (Application Specific Integrated Circuit), or any other type of integrated processing unit. In particular, the free-fall detection device 16 is connected at output to an interrupt input of the processor unit 18.

The free-fall detection device 16 comprises: an accelerometer 20 of the linear type; a register array 21 connected to the output of the accelerometer 20; a threshold register 22; and a free-fall detection circuit 24 connected to the register array 21 and to the threshold register 22. The free-fall detection device 16 further comprises an interface 25 (e.g. a I2C/SPI interface), arranged between the processor unit 18 and the register array 21 and the threshold register 22. In particular, all the components of the free-fall detection device 16 are conveniently integrated in a single chip of semiconductor material.

The accelerometer 20 is of a known type, including a MEMS (Micro-Electro-Mechanical-Systems) structure based on the semiconductor technology, and has three detection axes x, y and z so as to generate three acceleration signals $A_x$, $A_y$, $A_z$, each correlated to the acceleration detected along a respective detection axis. For example, the accelerometer 20 can be realized as described in "3-axis digital output accelerometer for future automotive applications", B. Vigna et al., AMAA 2004.

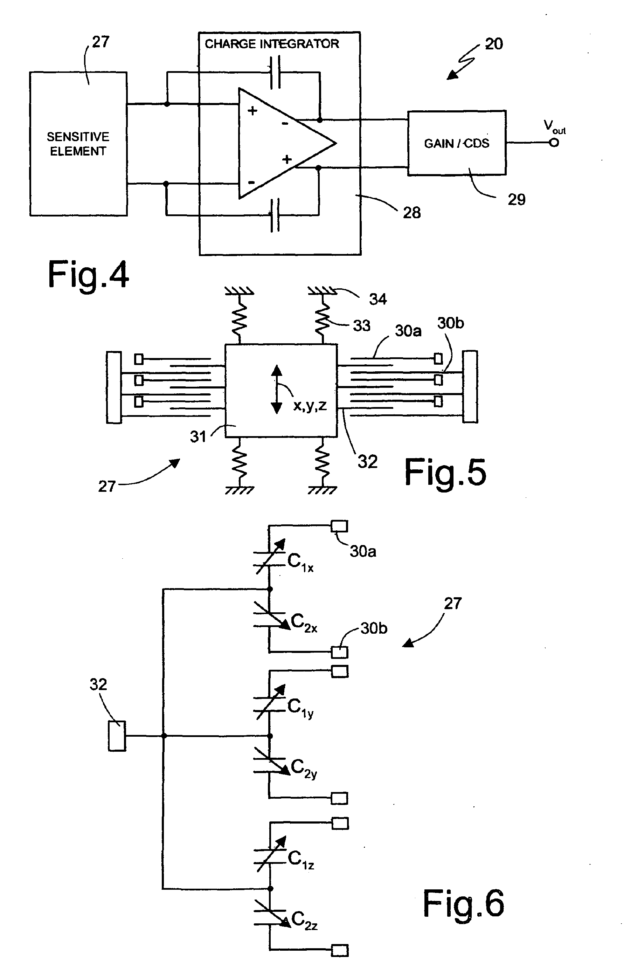

In brief, in a per se known manner, Figure 4, the accelerometer 20 is made up of a sensitive element 27, which detects acceleration and generates an electrical signal correlated to the detected acceleration, and an electronic circuit for conditioning the electrical signal, which typically comprises a charge integrator 28 and a gain and noise-cancelling stage 29 (in particular, using the Correlated Double Sampling or CDS technique), which supplies an output signal $V_{out}$. As illustrated schematically in Figure 5 (that refers to a uniaxial MEMS accelerometer for sake of clarity of illustration), the sensitive element 27 comprises a stator, of which only first and second fixed electrodes 30a, 30b are illustrated, and a rotor formed by a moving element 31 and mobile electrodes 32 fixed to the moving element 31, and each arranged between a respective first fixed electrode 30a and a respective second fixed electrode 30b. The moving element 31 is suspended by means of springs 33 to anchorage elements 34, so as to be movable along a detection axis.

As illustrated in Figure 6, the electrical equivalent circuit of the sensitive element 27 can be represented schematically with first capacitors $C_{1x}$, $C_{1y}$, $C_{1z}$ and second capacitors $C_{2x}$, $C_{2y}$, $C_{2z}$, one for each detection axis x, y, z; each one of the first capacitors being arranged in series with a respective one of the second capacitors, the capacitances of which being variable according to the distance between the mobile electrodes 32 and the fixed electrodes 30a, 30b and hence according to the displacement of the rotor with respect to the stator.

When the linear accelerometer 20 is subjected to an acceleration along a detection axis x, y, z, the moving element 31 moves along said axis, consequently a capacitive unbalancing is generated between the related first and second capacitors. This capacitive unbalancing is detected by the conditioning electronic circuit, which hence supplies at output the signal $V_{out}$.

In particular, the displacement of the moving element 31 occurs also in presence of a static acceleration (for example the acceleration of gravity), generating a corresponding capacitive unbalancing which is detected by the conditioning electronic circuit. It follows that, even in the resting condition, a non-zero acceleration is detected. Instead, during a free-fall, the displacement of the moving element 31 with respect to a reference system fixed with respect to the stator, which is also in free-fall, is zero (the mobile electrodes 32 remain centered with respect to the respective fixed electrodes 30a, 30b), so that the detected acceleration is almost (due to air friction) equal to zero.

In particular, the accelerometer 20 senses the movements of the electronic portable apparatus 10 and generates the corresponding acceleration signals $A_x$, $A_y$, $A_z$, which are sampled and hold in the register array 21. As will be described in greater detail hereinafter, the free-fall detection circuit 24 compares each one of the acceleration signals $A_x$, $A_y$, $A_z$ with a preset acceleration threshold $A_{th}$, stored in the threshold register 22, and generates a free-fall detection signal F, if certain conditions are met which are indicative of a free-fall event. The free-fall detection signal F is then sent to an output 26 of the free-fall detection device 16, to be sent in real time to the processor unit 18, as an interrupt signal for immediately activating appropriate actions for protecting the portable electronic apparatus 10. A typical action is to issue a command to the HDD device 11 through an industrial standard interface (such as ATA or SATA), for controlling a forced parking of the read/write head 13 in a safe position of the HDD device 11. Therefore, upon impacting the ground, the read/write head 13 and the data-storage medium 12 will not collide against each other, and damage to the HDD device 11 will be prevented.

The processor unit 18 can also access the data stored in the register array 21 through the interface 25, and program the acceleration threshold $A_{th}$ by writing in the threshold register 22.

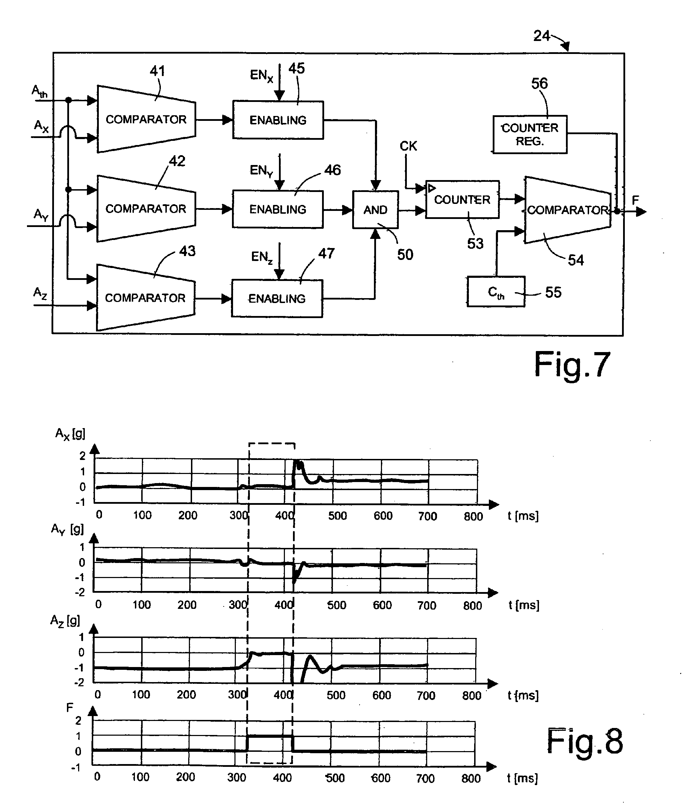

In detail, as shown in figure 7, the free-fall detection circuit 24 comprises a first threshold comparator 41, a second threshold comparator 42, and a third threshold comparator 43. The threshold comparators 41-43 receive at their inputs a respective acceleration signal $A_x$, $A_y$, $A_z$ from the accelerometer 20, and the acceleration threshold $A_{th}$ from the threshold register 22. The threshold comparators 41-43 compare the absolute value of the respective acceleration signal $A_x$, $A_y$, $A_z$ with the acceleration threshold $A_{th}$ and output a respective logic signal, for example of a high value, if the absolute value of the respective acceleration signal $A_x$, $A_y$, $A_z$ is smaller than the acceleration threshold $A_{th}$.

The free-fall detection circuit 24 further comprises three enabling stages 45, 46 and 47. In detail, each enabling stage 45-47, preferably made using logic gates, receives at its input the output of a respective threshold comparator 41-43 and an enabling signal $EN_x$, $EN_y$, $EN_z$, of a logic type. When the enabling signal $EN_x$, $EN_y$, $EN_z$ assumes a first logic value, for example high, the respective enabling stage 45-47 outputs the logic signal received by the respective threshold comparator 41-43. Otherwise, when the enabling signal $EN_x$, $EN_y$, $EN_z$ assumes a second logic value, in the example low, the enabling stage 45-47 outputs a constant logic signal of a high value.

The free-fall detection circuit 24 further comprises a three-input AND logic gate 50, receiving the outputs of the enabling stages 45-47; a counter 53, receiving the logic signal outputted by the AND logic gate 50 as count-enable signal and a clock signal CK generated in a per se known manner; and a threshold comparator 54, receiving the count signal generated by the counter 53 and a count threshold $C_{th}$, the latter being settable by writing in a dedicated register 55. In particular, the counter 53 is reset when the logic signal at the output of the AND logic gate 50 has a first logic value, for example low, while it is enabled for counting when the logic signal at the output of the AND logic gate 50 has a second logic value, for example high. The threshold comparator 54 outputs the free-fall detection signal F, which is supplied to the output 26 (figure 3) of the free-fall detection device 16, connected to the processor unit 18.

Finally, the free-fall detection circuit 24 comprises a counter register 56 connected to the output of the threshold comparator 54 for storing the free-fall detection signal F.

Operation of the free-fall detection circuit 24 is described hereinafter.

In particular, the principle of operation of the detection circuit 24 follows from the observation that, for any object in steady state, and thus subject to the only acceleration of gravity, it cannot happen that the acceleration along three mutually orthogonal axes x, y and z is lower than $1/\sqrt{3}\cdot g$ (0,577 g) at the same time. This is valid independently of the object orientation in the three-dimensional space. In fact, the magnitude A of the acceleration vector acting on the free-falling object can be calculated from the acceleration components along the three mutually orthogonal axes (acceleration signals $A_x$, $A_y$, $A_z$), with the following equation:

$$A = \sqrt{A_x^2 + A_y^2 + A_z^2}$$

Since the object is subject to the only acceleration of gravity, the value of the magnitude A must be equal to 1 g, and the minimum value that added three times gives 1 g is the afore said amount $1/\sqrt{3}\cdot g$ of 0,577 g. That is, in case the acceleration along one of the three orthogonal axes is lower than 0,577 g, the acceleration along at least one of the other two axes must be bigger than the above value 0,577 g to satisfy the equation.

The obtained number thus constitutes a good acceleration threshold $A_{th}$ for free-fall detection. In fact, to detect a free-fall event it is enough to acquire the acceleration values for the three detection axes x, y and z and check that their absolute values are at the same time lower than 0,577 g. Of course this value must be considered as a theoretical upper limit and a safeguard is needed to avoid false detections. Taking into account accelerometer offset accuracy and offset thermal drift, the value of the acceleration threshold $A_{th}$ is preferably set to 0,350 g. This value enables identification of the free-fall condition for any direction of free-fall of the portable apparatus 10 and it is at the same time insensitive to offsets due, for example, to temperature variations, component ageing, etc. In order for the above considerations to apply, the accelerometer 20 is preferably to be mounted close to the center of mass of the portable electronic apparatus 10, to reduce any centripetal acceleration, if the apparatus rotates during the free-fall.

It follows that during free-fall, each one of the acceleration signals $A_x$, $A_y$, and $A_z$ has an absolute value which is smaller than the acceleration threshold $A_{th}$ set via the threshold register 22. Therefore, the outputs of the threshold comparators 41-43, and hence the logic signal at the output of the AND logic gate 50 assume a high logic value. The counter 53 is enabled for counting, increasing the count signal at each switching of the clock signal CK. When the generated count signal exceeds the count threshold $C_{th}$, the signal at the output of the threshold comparator 54, i.e., the free-fall detection signal F, switches to the high logic state. The microprocessor circuit 18 then receives the free-fall detection signal F as interrupt signal, and consequently issues a control signal for undertaking the appropriate actions to protect the portable apparatus 10, and particularly the HDD device 11 from impact.

By appropriately setting the count threshold $C_{th}$, possible false indications of free-fall, due for example to vibrations of the table on which the portable electronic apparatus 10 is resting or to movements of the person who is using the portable electronic apparatus 10, do not cause switching of the free-fall detection signal F, and hence undesired parking of the read/write head 13. In fact, said false indications of free-fall have a duration smaller than the time interval corresponding to the count threshold $C_{th}$, and hence the free-fall detection signal F at the output of the threshold comparator 54 does not switch to the high logic value. For example, the count threshold $C_{th}$ can be set to a value corresponding to 8 ms.

In addition, via the enabling signals $EN_x$, $EN_y$, $EN_z$ supplied to the enabling stages 45-47 it is possible to disable detection of acceleration along a respective detection axis. In fact, only when said enabling signals $EN_x$, $EN_y$, $EN_z$ assume a given logic value, for example high, is the logic signal at output from the respective threshold comparator 41-43 sent to the AND logic gate 50. This is useful when it is certainly known what the orientation assumed by the portable electronic apparatus 10 will be during free-fall, in order to disable the detection axis or axes that is or are not important for the purposes of free-fall detection.

Figure 8 illustrates by way of example time plots of the acceleration signals $A_x$, $A_y$, and $A_z$ and of the free-fall detection signal F during a free-fall event of a portable electronic apparatus which is dropped from a typical desk height (about 70 cm). In particular, the free-fall event is highlighted by a dashed rectangle, while the following time interval corresponds to the portable electronic apparatus impacting to the ground.

The response times of the free-fall detection device 16 are very short and enable suitable actions for protecting the portable apparatus 10 to be carried out promptly.

Consider, by way of example, the case of a portable apparatus provided with hard disk which drops onto the floor from a height of one meter. The fall time t is calculated using the equation:

$$t = \sqrt{2 \cdot \frac{h}{g}}$$

where h is the initial height of the fall. Substituting the numeric values, a fall time of approximately 450 ms is obtained.

The response time of the free-fall detection device 16 for detecting the free-fall event is approximately 5 ms, the waiting time to prevent false free-fall indications is set to 8 ms (a value corresponding to the count threshold $C_{th}$), and the time necessary for the processor unit 18 to receive the free-fall detection signal F and to issue an appropriate signal for controlling parking in a safe position of the read/write head 13 of the hard disk 11 is approximately 2 ms. Considering moreover a time approximately of 30 ms for parking the read/write head 13, it follows that the time necessary for bringing the portable electronic apparatus 10 into a safe position is equal to approximately 45 ms, i.e., much less than the fall time calculated previously.

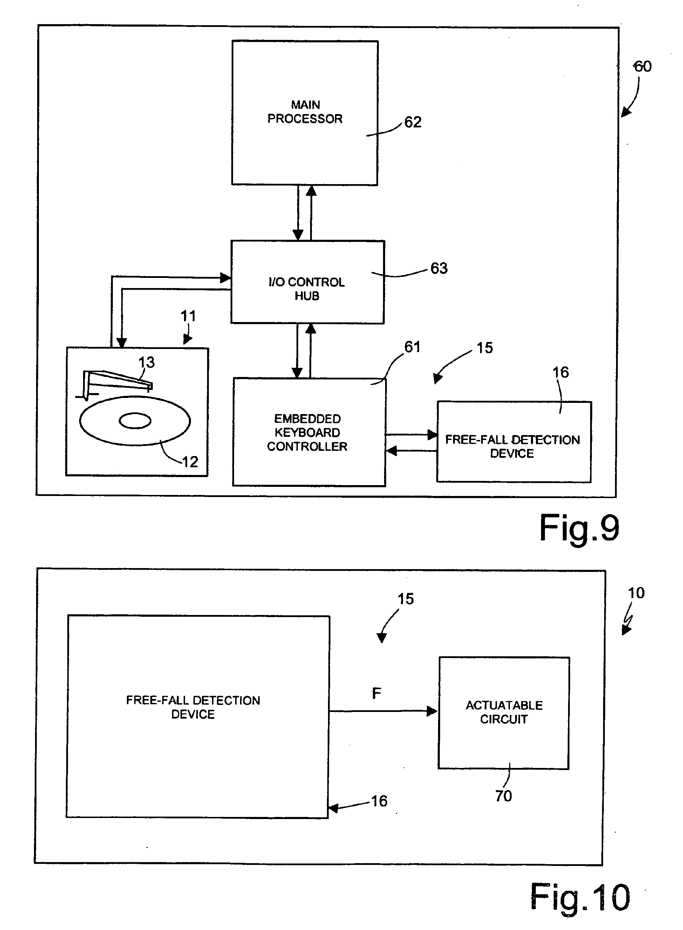

Figure 9 illustrates by way of example the application of the free-fall protection system 15 in a typical architecture of a portable PC 60. Since the above architecture is of a known type, only the elements directly related to the operation of the free-fall protection system 15 are illustrated.

In detail, the free-fall detection device 16 is connected to an embedded keyboard controller 61 provided internally with a microprocessor (corresponding to the processor unit 18). The embedded keyboard controller 61 is connected to a main processor 62 of the portable PC 60, through a I/O control hub 63 (e.g. ICH4-M). The main processor 62 is connected to HDD device 11 of the portable PC 60 through the I/O control hub 63 and a standard interface, for example an ATA interface.

At power on, the embedded keyboard controller 61 initializes the free-fall detection device 16, programs the acceleration threshold $A_{th}$ through the interface 25, and enables the interrupt feature. Then, upon detecting a free-fall event, the free-fall detection device 16 causes the free-fall detection signal F to switch to the high logic level, and issues it as interrupt signal to the microprocessor of the embedded keyboard controller 61. The latter interrupts the main processor 62, which immediately issues an unload command to the HDD device 11 through the I/O control hub 63 and the standard interface, to park the read/write head 13. Then, the main processor 62 executes code to monitor the free-fall condition. In particular, no access to the HDD device 11 is allowed during the period preceding the predicted ground impact. After the impact, the main processor 62 monitors the settlement of the electronic portable apparatus 10, through the accelerometer 20 of the free-fall detection device 16 and unparks the read/write head 13 when it is considered safe to resume operations.

The free-fall detection device described above has the following advantages.

First, it is possible to detect a free-fall event with extremely short response times, so as to ensure an efficient protection for the portable apparatuses, and in particular for the associated data-storage devices. In fact, the free-fall detection device operates in real time mode, since the free-fall detection is executed by a purely hardware circuit and all the operations linked to free-fall detection are incorporated in a single integrated device, so that further processing by a processor unit in the portable apparatus is not required. In particular, the digital data provided by the accelerometer 20 are compared with the acceleration threshold $A_{th}$ and the free-fall detection signal F is generated completely by hardware without any instructions latency. Therefore, the operating frequency of the processor unit 18 is not critical and there is no lengthy instruction execution time, as compared to known systems (in particular for the acquisition in polling of the acceleration data, and the pretty cumbersome computation of the acceleration magnitude). The generated free-fall detection signal F is issued in real time as an interrupt digital signal to the processor unit 18, and so there is no interface delay between the processor unit 18 and the free-fall detection device 16.

Furthermore, the free-fall detection device makes it possible to distinguish and ignore any false detection of free-fall, thus rendering the detection of free-fall extremely reliable.

The described free-fall detection device can advantageously be used for proving the occurrence of an impact following upon a free-fall. This is useful for example in the analysis of apparatuses returned for technical assistance on account of operating faults. It is in fact possible, by reading the contents of the counter register 56, wherein the free-fall detection signal F is stored, to verify whether the presumed faults are in fact due to a destructive event. In the case where the above register is a counter, it is also possible to know the number of impacts that the portable apparatus has undergone.

Furthermore, the free-fall detection device can be used for gathering the height from the ground from which the portable apparatus has fallen, by calculating in a known way the duration of the free-fall (for example, by starting a counter at the instant of detection of free-fall, which corresponds to the switching of the free-fall detection signal F, and stopping it at the instant of impact with the ground, which can be detected in a known way).

Even though the free-fall detection device must be permanently supplied, its circuit simplicity renders power consumption practically negligible, i.e., such as not to influence significantly the consumption of the battery that supplies it. In particular, it is possible to place the system in power saving mode, in order to minimize power consumption.

Also, the use of a three-axis accelerometer for the detection of the free-fall event, allows for a successful free-fall detection independently of the spatial orientation that the portable electronic apparatus may have when it starts falling.

Finally, it is clear that modifications and variations may be made to what has been described and illustrated herein, without thereby departing from the scope of the present invention, as defined in the attached claims.

In particular, the processor unit 18 can be implemented by a dedicated processor, or any other processor unit, such as the main processor in the portable electronic apparatus, or the HDD device controller. Also, the parking command for the read/write head 13 of the HDD device 11 can be issued by another processor alerted by processor unit 18.

The components of the free-fall detection device 16 could be integrated in different dice of semiconductor material, which could be assembled in a single package.

Furthermore, even if a count threshold $C_{th}$ has been provided to avoid possible free-fall false detections, it is possible to provide for an immediate detection of the free-fall event, by directly connecting the output of the AND logic gate 50 to the interrupt input of the processor unit 18, in order to further reduce the response time of the free-fall detection device 16.

Also, even if a three-axis accelerometer is in general required to detect the free-fall event independently of the spatial orientation that the portable electronic apparatus may have when it starts falling, theoretically a two- or even single axis accelerometer could be used, in case the above orientation is known and forced. If cost is a concern for the overall free-fall protection system, an analog accelerometer could be used, with the drawback of a certain performance degradation in terms of response time.

Furthermore, the free-fall detection signal F generated in a continuous way by the free-fall detection device 16 could not be used as interrupt for a processor unit, but directly activate appropriate protection actions. For example, the above signal could directly control a switch designed to disable a given function within the portable electronic apparatus, or else control turning-on of a warning light, or emission of an alarm sound signal upon detection of the free-fall. In general, as shown in figure 10, the free-fall detection signal F could directly control an actuatable circuit 70 in the portable electronic apparatus 10, configured to activate appropriate protection actions for the portable electronic apparatus 10.

The entire free-fall protection system could also be arranged inside the HDD device 11. In this case, the chip of the free-fall detection device 16 is mounted to a printed circuit board of the HDD device 11, together with the control circuit of the HDD device 11. The free-fall detection signal F could directly be received and interpreted by the control circuit of the HDD device 11, to instantaneously park the read/write head 13.

In addition, different acceleration thresholds can be used for the various detection axes. Also, the accelerometer 20 could be different from the one described.

Two threshold comparators for each detection axis can be used, one for the free-fall detection, as described previously, and the other, in a known way, for the detection of impact ("shock detector") so as to integrate in a single device all functions required for protecting mass-storage devices in portable apparatuses.

Finally, the protection actions initiated by the free-fall protection system are not limited to the parking of the read/write head of the HDD device. For example, upon detecting of the free-fall condition, the spindle motor of the HDD device could be controlled to stop the rotating disk spinning movement, or, as another example, for a portable PC designed for rugged environment, air bag technology employed in automotive industry could be applied.

## Claims

1.   An electronic free-fall detection device (16) for a portable apparatus (10), comprising:

      - an acceleration sensor (20) configured to generate a first, a second and a third acceleration signal ($A_x$, $A_y$, $A_z$), each one having respective values variable as a function of, and correlated to, a respective component of a sensed acceleration along a respective detection axis (x, y, z); and

- a free-fall detection processing module (24) coupled to said acceleration sensor (20);

wherein said free-fall detection processing module (24) is configured to carry out a comparison between the respective value of each one of said generated first, second and third acceleration signals ($A_x$, $A_y$, $A_z$) and a respective acceleration threshold ($A_{th}$), having a value which is indicative of a free-fall condition, and to generate a free-fall detection signal (F) according to the result of all three comparisons, **characterized in that** said free-fall detection signal (F) has a first logic value in the event that the absolute values of said first, second and third generated acceleration signals ($A_x$, $A_y$, $A_z$) are simultaneously lower than the respective acceleration threshold ($A_{th}$).

2. The device according to claim 1, wherein said respective acceleration threshold ($A_{th}$) is not higher than $1/\sqrt{3} \cdot g$ .

3. The device according to claim 2, wherein said respective acceleration threshold ($A_{th}$) is equal to 350 mg.

4. The device according to any one of the preceding claims, wherein said free-fall detection processing module comprises a dedicated purely hardware circuit (24) generating in a continuous way and in real-time said free-fall detection signal (F).

5. The device according to claim 4, wherein said acceleration sensor (20) and said dedicated purely hardware circuit (24) are integrated in a single chip, said acceleration sensor (20) being made as a MEMS.

6. The device according to claim 4 or 5 for a portable apparatus (10) provided with a processor unit (18), wherein said dedicated purely hardware circuit (24) has an output (26) supplying said free-fall detection signal (F) and configured to be connected to said processor unit (18).

7. The device according to any one of claims 4-6, wherein said dedicated purely hardware circuit (24) comprises a comparison stage (41-43) configured to carry out said comparison, and a detection stage (50, 53, 54) connected to said comparison stage (41-43) and generating said free-fall detection signal (F).

8. The device according to claim 7, wherein said comparison stage comprises a threshold comparator (41-43) for each of said acceleration signals ($A_x$, $A_y$, $A_z$), each of said threshold comparators (41-43) receiving one respective of said acceleration signals ($A_x$, $A_y$, $A_z$) and said respective acceleration threshold ($A_{th}$), and generating at output a respective logic signal; and wherein said detection stage (50, 53, 54) comprises an AND logic gate (50) receiving said logic signals.

9. The device according to claim 8, wherein said detection stage (50, 53, 54) further comprises false-detection rejecting means (53, 54), connected to said AND logic gate (50) and outputting said free-fall detection signal (F).

10. The device according to claim 9, wherein said false-detection rejecting means (53, 54) comprise a counter (53) receiving a clock signal (CK) and the logic signal outputted by said AND logic gate (50) as count-enable signal; and a threshold comparator (54) receiving the count signal generated by said counter (53) and a count threshold ($C_{th}$), and generating said free-fall detection signal (F).

11. The device according to any of the preceding claims, wherein said respective acceleration threshold ($A_{th}$) can be set, and further comprising first storage means (22) for storing said respective acceleration threshold ($A_{th}$).

12. The device according to any one of claims 4-11, wherein said dedicated hardware circuit (24) further comprises an enabling stage (45-47), which is connected to said comparison stage (41-43) and receives an enabling signal ($EN_x$, $EN_y$, $EN_z$) for each of said detection axes (x, y, z); said enabling stage (45-47) being configured to enable/disable detection of free-fall along each of said detection axes (x, y, z).

13. The device according to any one of claims 4-11, wherein said dedicated hardware circuit (24) further comprises second storage means (56) for storing the occurrence of said free-fall detection signal (F).

14. A free-fall protection system (15) for a portable apparatus (10), comprising a free-fall detection device (16) configured to issue a warning signal (F) upon detecting a free-fall condition of said portable apparatus (10); and a protection device (18; 70) connected to said free-fall detection device (16) and configured to activate protection actions for said portable apparatus (10) upon receiving said warning signal (F),
**characterized in that** said free-fall detection device (16) is made according to any one of the preceding claims.

15. The system according to claim 14, wherein said protection device comprises a processor unit (18) connected to an output (26) of said free-fall detection device (16) and having an interrupt input, said processor unit (18) receiving at said interrupt input said warning signal (F) for activating said protection actions.

16. The system according to claim 15, wherein said free-fall detection device (16) comprises first storage means (22) for storing said respective acceleration threshold ($A_{th}$); said processor unit (18) being further connected to said first storage means (22) and configured to program said respective acceleration threshold ($A_{th}$).

17. The system according to any one of claims 14-16 for a portable electronic apparatus (10) provided with a data-storage device (11), wherein said protection device (18; 70) is configured to be connected to said data-storage device (11) and said protection actions are intended to protect said data storage device (11) from damage due to said free-fall condition.

18. The system according to claim 17, wherein said data-storage device (11) comprises a read/write head (13), and said protection actions comprise issuing a command for parking said read/write head (13) in a safe position of said data-storage device (11).

19. A portable apparatus (10) provided with protection against free-fall, **characterized in that** it comprises a free-fall detection system (15) according to any one of claims 14-18.

20. The apparatus according to claim 19, further comprising a data-storage device (11) provided with a read/write head (13); and wherein said processor unit (18) controls a displacement of said read/write head (13) according to said warning signal (F).

21. The apparatus according to claim 20, wherein said free-fall detection device (16) and said protection device (18; 70) are arranged within said data-storage device (11).

22. The apparatus according to any one of claims 19-21, chosen in the group comprising laptop computers, personal data assistants, digital audio players, mobile phones, and digital cameras.

23. A data storage device (11) comprising a data storage medium (12), a read/write head (13) associated to said data storage medium (12), and a free-fall protection system (15) according to any one of claims 14-18.

24. The device according to claim 23, wherein said free-fall protection system (15) is configured to control a parking of said read/write head (13) in a safe position upon detecting said free-fall condition.

25. A method for protecting a portable apparatus (10) from a free-fall event, comprising:

- detecting a free-fall condition of said portable electronic apparatus (10) based on an acceleration of said portable electronic apparatus (10), and
- activating protection actions for said portable apparatus (10) upon detection of said free-fall condition,

wherein that detecting a free-fall condition comprises:

- acquiring a first, a second and a third acceleration signal ($A_x$, $A_y$, $A_z$), each one having respective values variable as a function of a respective component of said acceleration along a respective detection axis (x, y, z);
- carrying out a comparison between the respective value of each one of said acquired first, second and third acceleration signals ($A_x$, $A_y$, $A_z$) with a respective acceleration threshold ($A_{th}$), having a value which is indicative of a free-fall condition; and
- detecting said free-fall condition according to the result of all three comparisons, **characterized in that** said free-fall condition is detected in the event that the absolute values of said acquired acceleration signals ($A_x$, $A_y$, $A_z$) are simultaneously lower than the respective acceleration threshold ($A_{th}$).

26. The method according to claim 25, wherein said free-fall condition is detected in the event that said acceleration signals ($A_x$, $A_y$, $A_z$) are simultaneously lower than the respective acceleration threshold ($A_{th}$) for a preset time interval.

27. The method according to any one of claims 25-26, for a portable apparatus (10) comprising a processor unit (18), wherein activating comprises issuing an interrupt to said processor unit.

**Patentansprüche**

1. Elektronische Freifall-Detektionsvorrichtung (16) für eine tragbare Vorrichtung (10), aufweisend:

- einen Beschleunigungssensor (20), der konfiguriert ist, um ein erstes, ein zweites und ein drittes Beschleunigungssignal ($A_x$, $A_y$, $A_z$) zu erzeugen, von denen jedes entsprechende Werte aufweist, die als Funktion von einer entsprechenden Komponente einer abgetasteten Beschleunigung entlang einer entsprechenden Detektionsachse (x, y, z) veränderlich sind und damit korrelieren; und

- ein Freifall-Detektions-Verarbeitungsmodul (24), das mit dem Beschleunigungssensor (20) gekoppelt ist;

wobei das Freifall-Detektions-Verarbeitungsmodul (24) konfiguriert ist, einen Vergleich zwischen dem entsprechenden Wert von jedem der erzeugten ersten, zweiten und dritten Beschleunigungssignale (Ax, Ay, Az) mit einem entsprechenden Beschleunigungsschwellenwert ($A_{th}$) durchzuführen, der einen Wert aufweist, welcher einen Freifall-Zustand anzeigt, und ein Freifall-Detektionssignal (F) gemäß dem Ergebnis aller drei Vergleiche zu erzeugen, **dadurch gekennzeichnet, dass** das Freifall-Detektionssignal (F) einen ersten Logikwert bei einem Ereignis aufweist, bei dem die Absolutwerte des ersten, zweite und dritten erzeugten Beschleunigungssignals ($A_x$, $A_y$, $A_z$) gleichzeitig kleiner als der entsprechende Beschleunigungsschwellenwert ($A_{th}$) sind.

2. Vorrichtung nach Anspruch 1, wobei der entsprechende Beschleunigungsschwellenwert ($A_{th}$) nicht größer als $1\sqrt{3}$ g ist.

3. Vorrichtung nach Anspruch 2, wobei der entsprechende Beschleunigungsschwellenwert ($A_{th}$) gleich 350 mg ist.

4. Vorrichtung nach irgendeinem der vorstehenden Ansprüche, wobei das Freifall-Detektions-Verarbeitungsmodul eine besondere, rein hardwaremäßige Schaltung (24) aufweist, die auf eine kontinuierliche Art und Weise und in Echtzeit das Freifall-Detektionssignal (F) erzeugt.

5. Vorrichtung nach Anspruch 4, wobei der Beschleunigungssensor (20) und die besondere, rein hardwarebasierte Schaltung (24) auf einem einzigen Chip integriert sind, wobei der Beschleunigungssensor (20) als ein MEMS ausgeführt ist.

6. Vorrichtung nach Anspruch 4 oder 5 für eine tragbare Vorrichtung (10), die mit einer Prozessoreinheit (18) versehen ist, wobei die besondere, rein hardwarebasierte Schaltung (24) einen Ausgang (26) aufweist, der das Freifall-Detektionssignal (F) liefert und der konfiguriert ist, um mit der Prozessoreinheit (18) verbunden zu werden.

7. Vorrichtung nach irgendeinem der Ansprüche 4 bis 6, wobei die besondere, rein hardwarebasierte Schaltung (24) eine Vergleicherstufe (41-43), die konfiguriert ist, den Vergleich durchzuführen, und eine Detektionsstufe (50, 53, 54), die mit der Vergleichsstufe (41-43) verbunden ist und die das Freifall-Detektionssignal (F) erzeugt, aufweist.

8. Vorrichtung nach Anspruch 7, wobei die Vergleicherstufe einen Schwellenwertkomparator (41-43) für jedes der Beschleunigungssignale ($A_x$, $A_y$, $A_z$) aufweist, wobei jeder der Schwellenwert-Komparatoren (41-43) ein entsprechendes Beschleunigungssignal von den Beschleunigungssignalen ($A_x$, $A_y$, $A_z$) sowie den entsprechenden Beschleunigungsschwellenwert ($A_{th}$) entgegennimmt und am Ausgang ein entsprechendes Logiksignal erzeugt; und wobei die Detektionsstufe (50, 53, 54) ein AND-Logikgatter (50) umfasst, das die Logiksignale entgegennimmt.

9. Vorrichtung nach Anspruch 8, wobei die Detektionsstufe (50, 53, 54) ferner eine Fehldetektions-Zurückweisungseinrichtung (53, 54) umfasst, die mit dem AND-Logikgatter (50) verbunden ist und das Freifall-Detektionssignal (F) ausgibt.

10. Vorrichtung nach Anspruch 9, wobei die Fehldetektions-Zurückweisungseinrichtung (53, 54) einen Zähler (53), welcher ein Taktsignal (CK) sowie das durch das AND-Logikgatter (50) ausgegebene Logiksignal als Zählfreigabesignal entgegennimmt; und einen Schwellenwert-Komparator (54), der das durch den Zähler (53) erzeugte Zählsignal sowie einen Zähl-Schwellenwert ($C_{th}$) entgegennimmt und das Freifall-Detektionssignal (F) erzeugt, umfasst.

11. Vorrichtung nach irgendeinem der vorstehenden Ansprüche, wobei der entsprechende Beschleunigungsschwellenwert ($A_{th}$) eingestellt werden kann, und welche ferner eine erste Speichereinrichtung (22) zum Speichern des entsprechenden Beschleunigungsschwellenwertes ($A_{th}$) aufweist.

12. Vorrichtung nach irgendeinem der Ansprüche 4 bis 11, wobei die besondere Hardwareschaltung (24) ferner eine Freigabestufe (45-47) aufweist, welche mit der Vergleicherstufe (41-43) verbunden ist und für jede der Detektionsachsen (x, y, z) die ein Freigabesignal ($EN_x$, $EN_y$, $EN_z$) entgegennimmt; wobei die Freigabestufe (45-47) konfiguriert ist, die Detektion eines freien Falles entlang jeder der Detektionsachsen (x, y, z) freizugeben oder zu sperren.

13. Vorrichtung nach irgendeinem der Ansprüche 4 bis 11, wobei die besondere Hardwareschaltung (24) ferner eine zweite Speichereinrichtung (56) zum Speichern des Auftretens des Freifall-Detektionssignals (F) umfasst.

14. Freifall-Schutzsystem (15) für eine tragbare Vorrichtung (10), aufweisend eine Freifall-Detektionsvorrichtung (16), die konfiguriert ist, ein Warnsignal (F) beim Detektieren eines Freifall-Zustandes der tragbaren Vorrichtung (10) abzugeben; und

eine Schutzvorrichtung (18; 70), die mit der Freifall-Detektionsvorrichtung (16) verbunden ist und die konfiguriert ist, Schutzaktionen für die tragbare Vorrichtung (10) beim Entgegennehmen des Warnsignals (F) zu aktivieren, **dadurch gekennzeichnet, dass** die Freifall-Detektionsvorrichtung gemäß irgendeinem der vorstehenden Ansprüche aufgebaut ist.

15. System nach Anspruch 14, wobei die Schutzvorrichtung eine Prozessoreinheit (18) umfasst, welche mit einem Ausgang (26) der Freifall-Detektionsvorrichtung (16) verbunden ist und einen Unterbrechungseingang aufweist, wobei die Prozessoreinheit (18) an dem Unterbrechereingang das Warnsignal (F) zum Aktivieren der Schutzaktionen entgegennimmt.

16. System nach Anspruch 15, wobei die Freifall-Detektionsvorrichtung (16) eine erste Speichereinrichtung (22) zum Speichern des entsprechenden Beschleunigungsschwellenwertes ($A_{th}$) aufweist; wobei die Prozessoreinheit (18) ferner mit der ersten Speichereinrichtung (22) verbunden und konfiguriert ist, den entsprechenden Beschleunigungsschwellenwert ($A_{th}$) zu programmieren.

17. System nach irgendeinem der Ansprüche 14 bis 16 für eine tragbare elektronische Vorrichtung (10), die mit einer Datenspeichervorrichtung (11) versehen ist, wobei die Schutzvorrichtung (18; 70) konfiguriert ist, mit der Datenspeichervorrichtung (11) verbunden zu sein und wobei die Schutzaktionen beabsichtigen, die Datenspeichervorrichtung (11) vor Schaden aufgrund des Freifall-Zustandes zu bewahren.

18. System nach Anspruch 17, wobei die Datenspeichervorrichtung (11) einen Lese-/Schreib-Kopf (13) umfasst und die Schutzaktionen das Herausgeben eines Kommandos zum Parken des Lese-/Schreib-Kopfes (13) in einer sicheren Position der Datenspeichervorrichtung (11) beinhalten.

19. Tragbare Vorrichtung (10), mit einem Schutz gegen freien Fall versehen, **dadurch gekennzeichnet, dass** sie ein Freifall-Detektionssystem (15) gemäß irgendeinem der Ansprüche 14-18 umfasst.

20. Vorrichtung nach Anspruch 19, ferner aufweisend eine Datenspeichervorrichtung (11), die mit einem Lese-/Schreib-Kopf (13) versehen ist; und wobei die Prozessoreinheit (18) eine Verschiebung des Lese-/Schreib-Kopfes (13) gemäß dem Warnsignal (F) steuert.

21. Vorrichtung nach Anspruch 20, wobei die Freifall-Detektionsvorrichtung (16) und die Schutzvorrichtung (18; 70) innerhalb der Datenspeichervorrichtung (11) angeordnet sind.

22. Vorrichtung nach irgendeinem der Ansprüche 19 bis 21, ausgewählt aus der Gruppe welche umfasst: Laptop-Computer, persönliche Datenassistenten, digitale Audiospiele, Mobiltelefone und Digitalkameras.

23. Datenspeichervorrichtung (11), aufweisend ein Datenspeichermedium (12), einen Lese-/Schreib-Kopf (13), der mit dem Datenspeichermedium (12) verknüpft ist, und ein Freifall-Schutzsystem (15) gemäß irgendeinem der Ansprüche 14 bis 18.

24. Vorrichtung nach Anspruch 23, wobei das Freifall-Schutzsystem (15) konfiguriert ist, beim Detektieren des Freifall-Zustandes ein Parken des Lese-/Schreib-Kopfes (13) in einer sicheren Position zu steuern.

25. Verfahren zum Schutz einer tragbaren Vorrichtung (10) gegenüber einem Freifall-Ereignis, aufweisend:

- Detektieren eines Freifall-Zustandes der tragbaren elektronischen Vorrichtung (10) basierend auf einer Beschleunigung der tragbaren elektronischen Vorrichtung (10), und
- Aktivieren von Schutzaktionen für die tragbare Vorrichtung (10) bei Detektion des Freifall-Zustands,

wobei das Detektieren eines Freifall-Zustands umfasst:

- Erlangen eines ersten, eines zweiten und eines dritten Beschleunigungssignals ($A_x$, $A_y$, $A_z$), von denen jedes entsprechende Werte hat, die als Funktion einer entsprechenden Komponente der Beschleunigung entlang einer entsprechenden Detektionsachse (x, y, z) veränderlich sind;
- Ausführen eines Vergleiches zwischen dem entsprechenden Wert jedes der erlangten ersten, zweiten und dritten Beschleunigungssignale ($A_x$, $A_y$, $A_z$) mit einem entsprechenden Beschleunigungsschwellenwert ($A_{th}$), welcher einen Wert aufweist, der einen Freifall-Zustand anzeigt; und
- Detektieren des Freifall-Zustandes gemäß dem Ergebnis aller drei Vergleiche,

**dadurch gekennzeichnet, dass**
der Freifall-Zustand bei dem Ereignis detektiert wird, wenn die Absolutwerte der erlangten Beschleunigungssignale ($A_x$, $A_y$, $A_z$) gleichzeitig kleiner als der entsprechende Beschleunigungsschwellenwert ($A_{th}$) sind.

**26.** Verfahren nach Anspruch 25, wobei der Freifall-Zustand bei dem Ereignis detektiert wird, dass die Beschleunigungssignale ($A_x$, $A_y$, $A_z$) für ein voreingestelltes Zeitintervall gleichzeitig kleiner als der entsprechende Beschleunigungsschwellenwert ($A_{th}$) sind.

**27.** Verfahren nach irgendeinem der Ansprüche 25 bis 26 für eine tragbare Vorrichtung (10), welche eine Prozessoreinheit (18) umfasst, wobei das Aktivieren das Ausgeben einer Unterbrechung an die Prozessoreinheit beinhaltet.

## Revendications

**1.** Dispositif de détection de chute libre (16) électronique pour un appareil portable (10) comprenant :

un détecteur d'accélération (20) configuré pour générer un premier, un deuxième et un troisième signal d'accélération (Ax, Ay, Az), chacun ayant des valeurs respectives variables en fonction de, et corrélées à, une composante respective d'une accélération détectée le long d'un axe de détection respectif (x, y, z) ; et

un module de traitement de détection de chute libre (24) couplé audit détecteur d'accélération (20) ;

dans lequel ledit module de traitement de détection de chute libre (24) est configuré pour effectuer une comparaison entre la valeur respective de chacun desdits premier, deuxième et troisième signaux d'accélération générés (Ax, Ay, Az) et un seuil d'accélération respectif ($A_{th}$) ayant une valeur qui est indicative d'un état de chute libre, et pour générer un signal de détection de chute libre (F) en fonction du résultat de l'ensemble des trois comparaisons ;

**caractérisé en ce que** ledit signal de détection de chute libre (F) a une première valeur logique dans le cas où les valeurs absolues desdits premier, deuxième et troisième signaux d'accélération générés (Ax, Ay, Az) sont simultanément plus faibles que le seuil d'accélération respectif ($A_{th}$).

**2.** Dispositif selon la revendication 1, dans lequel ledit seuil d'accélération respectif (Ath) n'excède pas

$$1/\sqrt{3}.g.$$

**3.** Dispositif selon la revendication 2, dans lequel ledit seuil d'accélération respectif ($A_{th}$) est égal à 350 mg.

**4.** Dispositif selon l'une quelconque des revendications précédentes, dans lequel ledit module de traitement de détection de chute libre comprend un circuit purement matériel dédié (24) générant de manière continue et en temps réel ledit signal de détection de chute libre (F).

**5.** Dispositif selon la revendication 4, dans lequel ledit détecteur d'accélération (20) et ledit circuit purement matériel dédié (24) sont intégrés sur une puce unique, ledit détecteur d'accélération (20) étant fait comme un microsystème électromécanique.

**6.** Dispositif selon la revendication 4 ou la revendication 5, pour un appareil portable (10), muni d'une unité de traitement (18), dans lequel ledit circuit purement matériel dédié (24) dispose d'une sortie (26) délivrant ledit signal de détection de chute libre (F) et étant configurée pour être connectée à ladite unité de traitement (18).

**7.** Dispositif selon l'une quelconque des revendications 4 à 6, dans lequel ledit circuit purement matériel dédié (24) comprend un étage de comparaison (41-43) configuré pour effectuer ladite comparaison, et un étage de détection (50, 53, 54) connecté audit étage de comparaison (41-43) et générant ledit signal de détection de chute libre (F).

**8.** Dispositif selon la revendication 7, dans lequel ledit étage de comparaison comprend un comparateur de seuil (41-43) pour chacun desdits signaux d'accélération (Ax, Ay, Az), chacun desdits comparateurs de seuil (41-43) recevant un signal respectif desdits signaux d'accélération (Ax, Ay, Az) et ledit seuil d'accélération respectif ($A_{th}$), et générant en sortie un signal logique respectif ; et dans lequel ledit étage de détection (50, 53, 54) comprend une porte logique ET (50) recevant lesdits signaux logiques.

**9.** Dispositif selon la revendication 8, dans lequel ledit étage de détection (50, 53, 54) comprend en outre un moyen de rejet de détection erronée (53, 54) connecté à ladite porte logique ET (50) et délivrant en sortie ledit signal de détection de chute libre (F).

**10.** Dispositif selon la revendication 9, dans lequel ledit moyen de rejet de détection erronée (53, 54) comprend un compteur (53) recevant un signal d'horloge (CK) et le signal logique délivré en sortie par ladite porte logique ET (50) comme signal d'activation de comptage ; et un comparateur de seuil (54) recevant le signal de comptage généré par ledit compteur (53) et un seuil de comptage ($C_{th}$), et générant ledit signal de détection de chute libre (F).

**11.** Dispositif selon l'une quelconque des revendications précédentes, dans lequel ledit seuil d'accélération respectif ($A_{th}$) peut être réglé, et qui comprend en outre un premier moyen de stockage (22) pour stocker ledit seuil d'accélération respectif ($A_{th}$).

**12.** Dispositif selon l'une quelconque des revendications 4 à 11, dans lequel ledit circuit matériel dédié (24) comprend en outre un étage d'activation (45-47) qui est connecté audit étage de comparaison (41-43) et qui reçoit un signal d'activation (ENx, ENy, ENz) pour chacun desdits axes de détection (x, y, z) ; ledit étage d'activation (45-47) étant configuré pour activer/désactiver la détection d'une chute libre le long de chacun desdits axes de détection (x, y, z).

**13.** Dispositif selon l'une quelconque des revendications 4 à 11, dans lequel ledit circuit matériel dédié (24) comprend en outre un second moyen de stockage (56) pour stocker l'occurrence dudit signal de détection de chute libre (F).

**14.** Système de protection de chute libre (15) pour un appareil portable (10) comprenant un dispositif de détection de chute libre (16) configuré pour émettre un signal d'avertissement (F) lors de la détection d'un état de chute libre dudit appareil portable (10) ; et un dispositif de protection (18 ; 70) connecté audit dispositif de détection de chute libre (16) et configuré pour activer des actions de protection pour ledit appareil portable (10) à réception dudit signal d'avertissement (F),
**caractérisé ce que** ledit dispositif de détection de chute libre (16) est construit suivant l'une quelconque des revendications précédentes.

**15.** Système selon la revendication 14, dans lequel ledit dispositif de protection comprend une unité de traitement (18) connectée à une sortie (26) dudit dispositif de détection de chute libre (16) et ayant une entrée d'interruption, ladite unité de traitement (18) recevant au niveau de ladite entrée d'interruption ledit signal d'avertissement (F) pour activer lesdites actions de protection.

**16.** Système selon la revendication 15, dans lequel ledit dispositif de détection de chute libre (16) comprend un premier moyen de stockage (22) pour stocker ledit seuil d'accélération respectif (math) ; ladite unité de traitement (18) étant en outre connectée audit premier moyen de stockage (22) et configurée pour programmer ledit seuil d'accélération respectif ($A_{th}$).

**17.** Système selon l'une quelconque des revendications 14 à 16 pour un appareil électronique portable (10) muni d'un dispositif de stockage de données (11), dans lequel ledit dispositif de protection (18 ; 70) est configuré pour être connecté audit dispositif de stockage de données (11) et lesdites actions de protection ont pour objet de protéger ledit dispositif de stockage de données (11) de tout dommage dû audit état de chute libre.

**18.** Système selon la revendication 17, dans lequel ledit dispositif de stockage de données (11) comprend une tête de lecture/écriture (13), et lesdites actions de protection comprennent la délivrance d'une commande pour bloquer ladite tête de lecture/écriture (13) dans une position sûre dudit dispositif de stockage de données (11).

**19.** Appareil portable (10) muni d'une protection contre la chute libre, **caractérisé en ce qu'**il comprend un système de détection de chute libre (15) selon l'une quelconque des revendications 14 à 18.

**20.** Appareil selon la revendication 19, comprenant en outre un dispositif de stockage de données (11) muni d'une tête de lecture/écriture (13) ; et dans lequel ladite unité de traitement (18) contrôle un déplacement de ladite tête de lecture/écriture (13) suivant ledit signal d'avertissement (F).

**21.** Appareil selon la revendication 20, dans lequel ledit dispositif de détection de chute libre (16) et ledit dispositif de protection (18 ; 70) sont arrangés dans ledit dispositif de stockage de données (11).

**22.** Appareil selon l'une quelconque des revendications 19 à 21 et choisi dans un groupe d'appareils comprenant des ordinateurs portables, des assistants numériques personnels, des lecteurs audio numériques, des téléphones mobiles et des appareils photo numériques.

**23.** Dispositif de stockage de données (11) comprenant un support de stockage de données (12), une tête de lecture/écriture (13) associée audit support de stockage de données (12) et un système de protection de chute libre (15) selon l'une quelconque des revendications 14 à 18.

**24.** Dispositif selon la revendication 23, dans lequel ledit système de protection de chute libre (15) est configuré pour contrôler le blocage de ladite tête de lecture/écriture (13) dans une position sûre lors de la détection dudit état de chute libre.

**25.** Procédé pour protéger un appareil portable (10) d'un événement de chute libre, comprenant les étapes consistant à :

détecter un état de chute libre dudit appareil électronique portable (10) en se basant sur une accélération dudit appareil électronique portable (10), et
activer des actions de protection pour ledit appareil portable (10) lors de la détection dudit état de chute libre,
dans lequel cette détection d'un état de chute libre comprend les étapes consistant à :

acquérir un premier, un deuxième et un troisième signal d'accélération (Ax, Ay, Az), chacun ayant des valeurs respectives variables en fonction d'une composante respective de ladite accélération le long d'un axe de détection respectif (x, y, z) ;

effectuer une comparaison entre la valeur respective de chacun desdits premier, deuxième et troisième signaux d'accélération acquis (Ax, Ay, Az) et un seuil d'accélération respectif ($A_{th}$), ayant une valeur qui est indicative d'un état de chute libre ; et détecter ledit état de chute libre en fonction du résultat de l'ensemble des trois comparaisons, **caractérisé en ce que** ledit état de chute libre est détecté dans le cas où les valeurs absolues desdits signaux d'accélération acquis (Ax, Ay, Az) sont simultanément plus faibles que le seuil d'accélération respectif ($A_{th}$).

**26.** Procédé selon la revendication 25, dans lequel ledit état de chute libre est détecté dans le cas où lesdits signaux d'accélération (Ax, Ay, Az) sont simultanément plus faibles que le seuil d'accélération respectif ($A_{th}$), pendant un intervalle de temps prédéfini.

**27.** Procédé selon l'une quelconque des revendications 25 à 26, pour un appareil portable (10) comprenant une unité de traitement (18), dans lequel l'activation comprend la délivrance d'une interruption vers ladite unité de traitement.

Fig.1

| Impact Deceleration | Height (m) | Fall time (s) |
|---|---|---|
| 170 | 0.102 | 0.1439 |
| 190 | 0.127 | 0.1609 |
| 208 | 0.152 | 0.1763 |
| 224 | 0.178 | 0.1904 |
| 240 | 0.203 | 0.2036 |
| 268 | 0.254 | 0.2276 |
| 379 | 0.508 | 0.3219 |
| 464 | 0.762 | 0.3942 |
| 536 | 1.016 | 0.4552 |
| 600 | 1.270 | 0.5089 |
| 657 | 1.524 | 0.5575 |
| 709 | 1.778 | 0.6022 |
| 758 | 2.033 | 0.6437 |
| 804 | 2.287 | 0.6828 |
| 848 | 2.541 | 0.7197 |

Fig.2

Fig.3

EP 1 612 565 B1

Fig.4

Fig.5

Fig.6

Fig.7

Fig.8

MAIN
PROCESSOR
62

I/O CONTROL
HUB
63

11

13

12

EMBEDDED
KEYBOARD
CONTROLLER
61

15

FREE-FALL DETECTION
DEVICE
16

60

Fig.9

FREE-FALL DETECTION
DEVICE

15

F

ACTUATABLE
CIRCUIT
70

16

10

Fig.10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0444449 A
- EP 0658894 A
- US 4745564 A
- JP 2000249717 A